# NEUE EUROPÄISCHE PATENTSCHRIFT

(11) **EP 2 129 560 B2**
(45) Veröffentlichungstag und Bekanntmachung des Hinweises auf die Entscheidung über den Einspruch: **23.06.2021**
(45) Hinweis auf die Patenterteilung: 22.01.2014
(21) Anmeldenummer: 08716656.7
(22) Anmeldetag: 20.03.2008
(51) Int. Cl.: B60T 7/20, B60T 13/26, B60T 13/68

(54) **FESTSTELLBREMSANLAGE FÜR NUTZFAHRZEUGE UND BETRIEBSVERFAHREN FÜR EINE FESTSTELLBREMSANLAGE**
PARKING BRAKE SYSTEM FOR UTILITY VEHICLES AND OPERATING METHOD FOR A PARKING BRAKE SYSTEM
SYSTÈME DE FREIN DE STATIONNEMENT POUR VÉHICULES UTILITAIRES ET PROCÉDÉ D'UTILISATION D'UN SYSTÈME DE FREIN DE STATIONNEMENT

(30) Priorität: 22.03.2007 DE 102007014423
(43) Veröffentlichungstag der Anmeldung: 09.12.2009
(73) Patentinhaber: KNORR-BREMSE Systeme für Nutzfahrzeuge GmbH, 80809 München (DE)
(72) Erfinder: HILBERER, Eduard, 68766 Hockenheim (DE); HERGES, Michael, 80935 München (DE); SZÉLL, Péter, H-1163 Budapest (HU)
(74) Vertreter: DTS Patent- und Rechtsanwälte Schnekenbühl und Partner mbB
(86) Internationale Anmeldenummer: PCT/EP2008/002247
(87) Internationale Veröffentlichungsnummer: WO 2008/113591

(56) Entgegenhaltungen:
- EP-A1- 1 785 325
- EP-A2- 0 268 045
- EP-A2- 1 923 284
- WO-A2-2008/101592
- DE-A1- 3 444 639
- DE-A1- 10 336 611
- DE-A1- 10 336 611
- DE-A1- 19 653 264
- DE-A1- 19 653 264
- DE-A1- 19 752 147
- DE-A1-102005 026 342
- US-A- 4 586 584
- US-A- 4 900 098

## Beschreibung

Die Erfindung betrifft eine Feststellbremsanlage für ein mit einem Anhänger pneumatisch koppelbares Nutzfahrzeug, mit einer Steuereinheit, die eine Steuerelektronik, mindestens eine erste und eine zweite von der Steuerelektronik ansteuerbare Ventileinrichtung, die jeweils mindestens zwei Schaltzustände aufweisen, einen mit einer Druckluftquelle koppelbaren Drucklufteingang, mindestens einen ersten und einen zweiten Druckluftarbeitsausgang und einen Entlüftungsausgang umfasst, wobei ein Relaisventil vorgesehen ist, das einen durch die erste Ventileinrichtung der Steuereinheit zur Verfügung gestellten Steuerdruck empfängt und in Abhängigkeit des Steuerdruckes mindestens einen Federspeicherzylinder be- oder entlüftet, wobei eine Anhängerbremsanlage in Abhängigkeit eines von der zweiten Ventileinrichtung zur Verfügung gestellten und durch einen Drucksensor erfassbaren Steuerdruckes be- oder entlüftbar ist und wobei die zweite Ventileinrichtung in einem ersten ihrer mindestens zwei Schaltzustände ohne Zwischenschaltung des Relaisventils mit dem Drucklufteingang der Steuereinheit gekoppelt ist.

Die Erfindung betrifft weiterhin ein Verfahren zum Steuern und/oder Regeln des Betriebs einer Feststellbremsanlage für ein mit einem Anhänger pneumatisch koppelbares Nutzfahrzeug, wobei die Feststellbremsanlage eine Steuereinheit aufweist, die eine Steuerelektronik, mindestens eine erste und eine zweite von der Steuerelektronik ansteuerbare Ventileinrichtung, die jeweils mindestens zwei Schaltzustände aufweisen, einen mit einer Druckluftquelle koppelbaren Drucklufteingang, mindestens einen ersten und einen zweiten Druckluftarbeitsausgang und einen Entlüftungsausgang umfasst, wobei ein Relaisventil vorgesehen ist, das einen durch die erste Ventileinrichtung der Steuereinheit zur Verfügung gestellten Steuerdruck empfängt und in Abhängigkeit des Steuerdruckes mindestens einen Federspeicherzylinder be- oder entlüftet, wobei eine Anhängerbremsanlage in Abhängigkeit eines von der zweiten Ventileinrichtung zur Verfügung gestellten und durch einen Drucksensor erfassbaren Steuerdruckes be- oder entlüftet wird und wobei die zweite Ventileinrichtung in einem ersten ihrer mindestens zwei Schaltzustände ohne Zwischenschaltung des Relaisventils mit dem Drucklufteingang der Steuereinheit gekoppelt ist.

Elektrische Feststellbremsanlagen gewinnen im Bereich der Nutzfahrzeugtechnik zunehmend an Bedeutung. Der Kern einer solchen Feststellbremsanlage ist eine Steuereinheit mit Ventilen, Sensoren und elektronischen Bauteilen, wobei diese Komponenten die pneumatischen Abläufe der Feststellbremsanlage steuern beziehungsweise regeln und überwachen.

DE 10 2005 026 342 A1 offenbart eine Druckluftversorgungseinrichtung mit einer elektronischen Luftaufbereitungsanlage und ein Ventilgehäuse an dem ein Feststellbremsanlagenmodul zur Druckluftversorgung einer Feststellbremsanlage über eine Flanschverbindung angeordnet ist. Die Flanschverbindung stellt eine elektrische und eine pneumatische Schnittstelle zwischen der Luftaufbereitungsanlage und dem Feststellbremsanlagenmodul zur Verfügung und in dem Ventilgehäuse ist ein Druckbegrenzer angeordnet, der einen einer Anhängerdruckluftversorgung und der Feststellbremsanlage zugeführten Druck begrenzt.

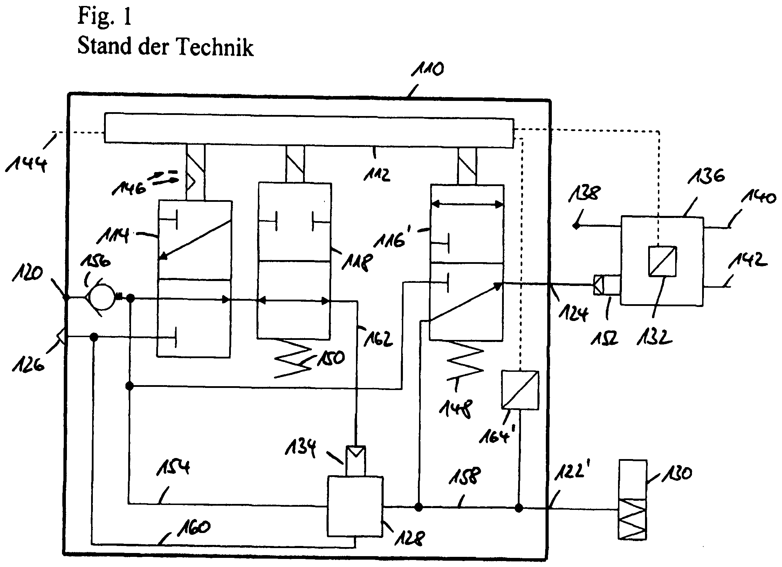

Figur 1 zeigt eine schematische Darstellung einer elektrischen Feststellbremsanlage des Standes der Technik. Eine Steuereinheit 110 weist eine Steuerelektronik 112 und mehrere mit der Steuerelektronik 112 gekoppelte Magnetventile 114, 116', 118 auf. Die Steuerelektronik 112 ist über eine elektrische Schnittstelle 144 mit weiteren Fahrzeugkomponenten verbunden, wobei über die elektrische Schnittstelle 144 die Energieversorgung der Steuerelektronik 112 sowie der Signalaustausch mit anderen Fahrzeugkomponenten erfolgen. Insbesondere kann die Möglichkeit zur Verbindung mit einem Datenbus, beispielsweise einem CAN-Bus bestehen. Das Magnetventil 114 ist als bistabiles 3/2-Wege-Ventil ausgelegt. Die Schaltstellung der Ventileinrichtung 114 wird also nur aufgrund aktiver Ansteuerung durch die Steuerelektronik 112 verändert. Die Bistabilität der Ventileinrichtung 114 ist durch eine symbolisch angedeutete Verriegelungseinrichtung 146 veranschaulicht, die vorzugsweise elektrisch ansteuerbar ist. Ein weiteres Magnetventil 116' ist als von einer Feder 148 beaufschlagtes 3/2-Wege-Ventil realisiert. Ferner ist eine Ventileinrichtung 118 vorgesehen, die in Form eines 2/2-Wege-Ventils mit Feder 150 ausgebildet ist und als Druckhalteventil dient. Die Steuereinheit 110 hat einen Drucklufteingang 120, der mit einer Druckluftquelle, beispielsweise einem Kompressor, mittelbar oder unmittelbar gekoppelt werden kann. Weiterhin ist ein Entlüftungsausgang 126 vorgesehen. Ferner enthält die Steuereinheit 110 zwei Druckluftarbeitsausgänge 122', 124. An dem ersten Druckluftarbeitsausgang 122' ist ein Federspeicherzylinder 130 des Nutzfahrzeugs angeschlossen. Im Allgemeinen sind der Hinterachse des Zugfahrzeugs zwei Federspeicherzylinder zugeordnet, wobei der dargestellte Federspeicherzylinder 130 hierfür beispielhaft ist. Beide Federspeicherzylinder können über den Druckluftarbeitsausgang 122' belüftet und entlüftet werden. Der weitere Druckluftarbeitsausgang 124 steht mit einem einen Drucksensor 132 aufweisenden Anhängersteuermodul 136 über einen Steuereingang 152 in Verbindung. Das Anhängersteuerventil 136 hat weiterhin eine Versorgungseingang, eine Versorgungskupplung 140 und eine Steuerkupplung 142. Die Kupplungen 140, 142 sind mit einem Anhänger verbindbar. In der Steuereinheit 110 ist weiterhin ein Relaisventil 128 angeordnet. Dieses steht über eine Versorgungsleitung 154 mit dem Drucklufteingang 120 in Verbindung, wobei dem Drucklufteingang 120 noch ein Rückschlagventil 156 nachgeschaltet ist. Das Relaisventil 128 steht über eine Arbeitsleitung 158 mit dem ersten Druckluftarbeitsausgang 122 in Verbindung. Weiterhin ist das Relaisventil 128 über eine Entlüftungsleitung 160 mit dem Entlüftungsausgang 126 verbunden. Über eine Steuerleitung 162 steht ein Steuereingang 134 des Relaisventils 128 mit dem 2/2-Wege-Magnetventil 118 und hierüber im dargestellten Schaltzustand des 2/2-Wege-Magnetventils mit dem 3/2-Wege-Magnetventil 114 in Verbindung. Das 3/2-Wege-Magnetventil 114 steht mit der Versorgungsleitung 154 und mit der Entlüftungsleitung 126 in Verbindung. Ebenso ist das 3/2-Wege-Magnetventil 116' mit der Versorgungsleitung 154 verbunden. Ein weiterer Anschluss des 3/2-Wege-Magnetventils 116' ist mit der Arbeitsleitung 158 verbunden. An die Arbeitsleitung 158 ist weiterhin ein Drucksensor 164 angeschlossen, der ein elektrisches Signal an die Steuerelektronik 112 liefern kann.

Die so ausgelegte Steuereinheit 110 kann in nützlicher Weise in die Druckluftversorgungseinrichtung eines Nutzfahrzeugs integriert werden. Derartige Druckluftversorgungseinrichtungen haben neben der Reinigungsfunktion, der Druckreglerfunktion und der Mehrkreisschutzventilfunktion, um einige wesentliche Aufgaben zu nennen, die Möglichkeit, weitere Funktionen des Nutzfahrzeugs zu übernehmen, beispielsweise die im vorliegenden Zusammenhang relevante Steuerung, Regelung und Überwachung der Feststellbremsanlage.

Im dargestellten Schaltzustand der Feststellbremsanlage gemäß Figur 1 gelangt vom Drucklufteingang 120 Druckluft über die Ventileinrichtungen 114, 118 zu dem Steuereingang 134 des Relaisventils 128. Folglich wird der in der Versorgungsleitung 154 am Relaisventil 128 anstehende Druck über die Arbeitsleitung 158 und den Druckluftarbeitsausgang 122 zum Federspeichezylinder 130 geleitet. Dies hat ein Belüften des Federspeicherzylinders 130 und somit ein Lösen der Feststellbremsanlage des Zugfahrzeugs zur Folge. Gleichermaßen wird über die Arbeitsleitung 158 und den zweiten Druckluftarbeitsausgang 124 der Steuereingang 152 des Anhängersteuermoduls 136 belüftet. Dies hat aufgrund der pneumatischen Auslegung des Anhängersteuermoduls 136 ein Entlüften der mit der Steuerkupplung 142 verbundenen Anhängerbremsanlage zur Folge. Folglich werden auch die Bremsen der Anhängerbremsanlage gelöst. Wird das 3/2-Wege-Magnetventil 114 umgeschaltet, während das 2/2-Wege-Magnetventil 118 in seiner dargestellten Stellung verbleibt, so hat dies ein Entlüften des Steuereingangs 134 des Relaisventils 128 über die Entlüftungsleitung 160 und den Entlüftungsausgang 126 zur Folge. Dementsprechend werden auch die Arbeitsleitung 158 und der Federspeicherzylinder 130 über den Druckluftarbeitsausgang 122 entlüftet. Dies hat zur Folge, dass die den Federspeicherzylindern 130 zugeordneten Bremsen des Nutzfahrzeugs gespannt werden. Bei unveränderter Stellung des 3/2-Wege-Magnetventils 116' wird auch der Steuereingang 152 des Anhängersteuermoduls 136 entlüftet. Folglich wird die Anhängerbremsanlage über die Steuerkupplung 142 belüftet. Dies hat zur Folge, dass auch die Anhängerbremsanlage bremst. Das Nutzfahrzeug samt Anhänger kann somit sicher mit gebremstem Zugfahrzeug und gebremstem Anhänger geparkt werden. Um die Sicherheit des Parkzustandes zu prüfen, ist das 3/2-Wege-Magnetventil 116' vorgesehen. Dieses kann von der Steuerelektronik 112 in dem beschriebenen Parkzustand kurzzeitig umgeschaltet werden, so dass der Druckluftarbeitsausgang 124 und somit der Steuereingang 152 des Anhängersteuermoduls 136 über die Versorgungsleitung 154 belüftet werden. Folglich wird die Anhängerbremsanlage über die Steuerkupplung 142 entlüftet, wodurch die Bremswirkung des Anhängers aufgehoben wird. Das Umschalten des 3/2-Wege-Magnetventils 116' kann somit einen Testzustand herbeiführen, in dem das gesamte Nutzfahrzeug, bestehend aus Zugfahrzeug und Anhänger, allein durch die Feststellbremse des Zugfahrzeugs gehalten werden muss.

Der Erfindung liegt die Aufgabe zugrunde, eine elektrische Feststellbremsanlage mit zusätzlichen Funktionen auszustatten.

Die Erfindung baut auf der gattungsgemäßen Feststellbremsanlage dadurch auf, dass die zweite Ventileinrichtung ohne Zwischenschaltung des Relaisventils in einem zweiten ihrer mindestens zwei Schaltzustände mit dem Entlüftungsausgang der Steuereinheit gekoppelt ist. Die zweite Ventileinrichtung hat somit einen Anschluss, der ohne Zwischenschaltung eines Relaisventils mit der Druckluftquelle verbunden ist, was auch bereits gemäß dem Stand der Technik der Fall ist, und einen weiteren Anschluss, der nun nicht mehr, wie beim Stand der Technik mit der Arbeitsleitung des Relaisventils, sondern mit dem Entlüftungsausgang der Steuereinheit verbunden ist. Auf diese Weise ist die Ansteuerung der Anhängerbremsanlage nun zwar nicht mehr an den von dem Relaisventil zur Verfügung gestellten Druck gekoppelt, eine Verbindungsleitung zwischen der an das Relaisventil angeschlossenen Arbeitsleitung und der in der Steuereinheit angeordneten zweiten Ventileinrichtung ist aber entbehrlich. Die Anhängerbremsanlage wird somit autark von der zweiten Ventileinrichtung durch Be- und Entlüften einer Steuerleitung angesteuert, wobei die damit im Zusammenhang stehenden Steuerdrücke durch einen Drucksensor überwacht werden. Indem die Anhängerbremsanlage aufgrund der Kopplung der ansteuernden Ventileinrichtung sowohl mit einer Belüftungs- als auch einer Entlüftungsleitung unabhängig vom Zustand der Feststellbremsanlage des Zugfahrzeugs ansteuerbar ist, lässt sich während der Fahrt durch die elektrische Feststellbremsanlage eine Bremsung des Anhängers durchführen, womit eine sogenannte Streckbremsfunktion realisiert wird. Dies ist insbesondere bei Bergabfahrten von Nutzen, um ein Auflaufen des Anhängers auf das Zugfahrzeug zu vermeiden. Im Rahmen einer Streckbremsung wird bei belüfteten Federspeicherzylindern des Zugfahrzeugs die Steuerleitung zwischen Zugfahrzeug und Anhänger zeitlich begrenzt und gestuft belüftet.

Die Erfindung ist in besonders vorteilhafter Weise dadurch weitergebildet, dass die zweite Ventileinrichtung ein bistabiles 3/2-Wege-Magnetventil ist, das in seinem ersten Schaltzustand den zweiten Druckluftarbeitsausgang belüftet und die Anhängerbremsanlage entlüftet, während in dem zweiten Schaltzustand der zweite Druckluftarbeitsausgang entlüftet und die Anhängerbremsanlage belüftet werden. Ein Umschalten des bistabilen 3/2-Wege-Magnetventils ist daher nur mittels aktiver Ansteuerung durch die Steuerelektronik möglich. Hierdurch ist ein dauerhaftes Bestromen der zweiten Ventileinrichtung zur Aufrechterhaltung ihrer Schaltzustände entbehrlich. Gleichwohl lässt sich die zweite Ventileinrichtung auch als monostabiles Magnetventil auslegen. Dann ist in einer Variante eine Bestromung zum Belüften der Anhängerbremsanlage erforderlich, während in der anderen Variante ein Bestromen der zweiten Ventileinrichtung zum Entlüften genutzt wird.

Weiterhin kann vorgesehen sein, dass der Drucksensor in einem Anhängersteuermodul vorgesehen ist, das mit einer Druckluftquelle und dem zweiten Druckluftarbeitsausgang sowie mit einer Versorgungskupplung und einer Steuerkupplung zur Versorgung und Steuerung der Anhängerbremsanlage verbunden ist. Die Kopplung der Bremse eines Zugfahrzeugs mit dem Anhänger erfolgt in den meisten Fällen über ein Anhängersteuermodul, das mit einem Drucksensor ausgestattet ist. Da im Rahmen der vorliegenden Erfindung ein Drucksensor benötigt wird, der den dem Anhänger zugeführten Druck misst, insbesondere zur Bereitstellung einer Streckbremsfunktion, lässt sich aufgrund der Anwesenheit des Drucksensors im Anhängersteuermodul die Erfindung ohne zusätzlichen Aufwand an Drucksensoren realisieren. Die zuvor erwähnte Streckbremsfunktion wir durch Entlüftung eines Steuereingangs des Anhängersteuermoduls herbeigeführt.

Die Erfindung zeigt ihre besonderen Vorteile in dem Fall, dass die Steuereinheit in eine elektronische Druckluftversorgungseinrichtung integriert ist. Hierdurch liegt ein hoch integriertes System vor.

Die Erfindung baut auf dem gattungsgemäßen Verfahren dadurch auf, dass die zweite Ventileinrichtung in einem zweiten ihrer mindestens zwei Schaltzustände ohne Zwischenschaltung des Relaisventils mit dem Entlüftungsausgang der Steuereinheit gekoppelt ist. Auf diese Weise werden die Vorteile und Besonderheiten der erfindungsgemäßen Feststellbremsanlage auch im Rahmen eines Verfahrens umgesetzt. Dies gilt auch für die nachfolgend angegebenen besonders bevorzugten Ausführungsformen des erfindungsgemäßen Verfahrens.

Nützlicherweise ist vorgesehen, dass die zweite Ventileinrichtung ein bistabiles 3/2-Wege-Magnetventil ist, das in seinem ersten Schaltzustand den zweiten Druckluftarbeitsausgang belüftet und die Anhängerbremsanlage entlüftet, während in dem zweiten Schaltzustand der zweite Druckluftarbeitsausgang entlüftet und die Anhängerbremsanlage belüftet wird.

Das Verfahren ist in der Weise nützlich weitergebildet, dass der erste Schaltzustand der der zweiten Ventileinrichtung während der Fahrt des Nutzfahrzeugs und zur Realisierung einer Testfunktion eingestellt wird.

Weiterhin ist vorgesehen, dass der zweite Schaltzustand der zweiten Ventileinrichtung zum Parken des Nutzfahrzeugs und während der Fahrt des Nutzfahrzeugs zur Realisierung einer Streckbremsfunktion eingestellt wird.

Die Erfindung wird nun in Bezug auf die begleitenden Zeichnungen anhand besonders bevorzugter Ausführungsformen beispielhaft erläutert.

Es zeigen:
- Figur 1: eine schematische Darstellung einer elektrischen Feststellbremsanlage des Standes der Technik;
- Figur 2: eine schematische Darstellung einer elektrischen Feststellbremsanlage gemäß der vorliegenden Erfindung und
- Figur 3: eine schematische Darstellung der Steuereinheit für eine weitere elektrische Feststellbremsanlage gemäß der vorliegenden Erfindung.

Die in Figur 1 dargestellte Feststellbremsanlage des Standes der Technik wurde vorstehend bereits eingehend erläutert.

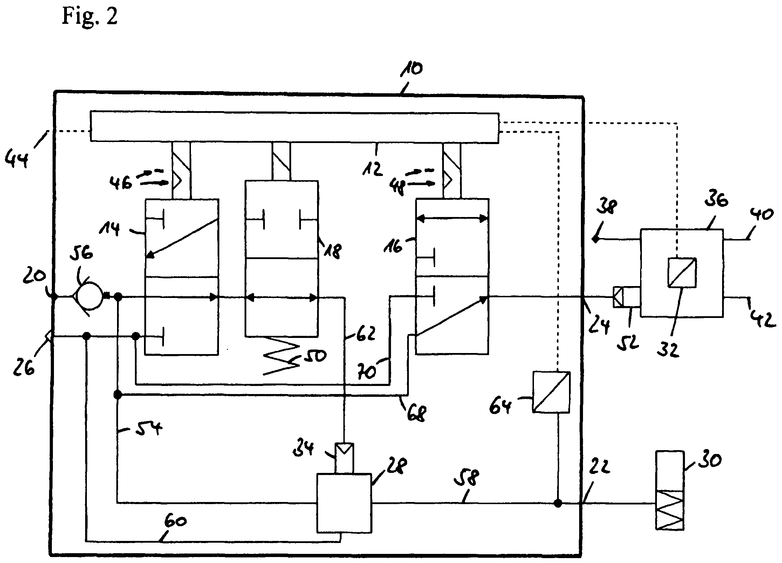

Figur 2 zeigt eine schematische Darstellung einer elektrischen Feststellbremsanlage gemäß der vorliegenden Erfindung. In Figur 2 gezeigte Komponenten, die Komponenten der Feststellbremsanlage gemäß Figur 1 ähnlich sind, werden in Figur 2 mit Bezugszeichen gekennzeichnet, die im Vergleich zu den Bezugszeichen der Figur 1 um 100 vermindert sind. Im Gegensatz zu der Feststellbremsanlage gemäß Figur 1 ist die zweite Ventileinrichtung 16 nicht als monostabiles sondern als bistabiles 3/2-Wege-Magnetventil ausgestattet. Dies ist durch die Verriegelungseinrichtung 48 symbolisiert, die ähnlich der Verriegelungseinrichtung 46 ausgebildet sein kann. Die Ventileinrichtung 16 steht über die Versorgungsleitung 68 und das Rückschlagventil 56 mit dem Drucklufteingang 20 der Steuereinheit in Verbindung. Über die Entlüftungsleitung 70 ist die Ventileinrichtung 16 mit dem Entlüftungsausgang 26 der Steuereinheit 10 verbunden. Im dargestellten Schaltzustand der Ventileinrichtung 16 wird der Steuereingang 52 des Anhängersteuerventils 36 über den Druckluftarbeitsausgang 24 belüftet, so dass die Anhängerbremsanlage über die Steuerkupplung 42 des Anhängersteuermoduls 36 entlüftet wird. Wird die Ventileinrichtung 16 umgeschaltet, so wird der Steuereingang 52 des Anhängersteuermoduls 36 entlüftet. Folglich wird die Anhängerbremsanlage über die Steuerkupplung 42 des Anhängersteuermoduls 36 belüftet. Der Drucksensor 32 überwacht die entsprechenden Steuerdrücke. Ist die Feststellbremse des Nutzfahrzeugs gespannt, so nimmt die Ventileinrichtung 16 ihren nicht dargestellten Schaltzustand ein, das heißt der Steuereingang 52 des Anhängersteuermoduls 36 wird entlüftet. Zur Bereitstellung der Testfunktion wird die Ventileinrichtung 16 kurzfristig umgeschaltet, um so den Steuereingang 52 des Anhängersteuermoduls 36 zu belüften und auf diese Weise die Bremswirkung des Anhängers aufzuheben. Während der Fahrt des Nutzfahrzeugs hat die Ventileinrichtung 16 ihren dargestellten Schaltzustand. Soll eine Streckbremsfunktion realisiert werden, so wird die Ventileinrichtung 16 umgeschaltet, um den Steuereingang 52 des Anhängersteuermoduls 36 zu entlüften. Folglich wird die Anhängerbremsanlage mittels der erfindungsgemäßen elektrischen Feststellbremsanlage belüftet, was eine Bremsung des Anhängers zur Folge hat.

Indem die Ansteuerung des Anhängersteuermoduls 36 somit vollständig von den Betriebszuständen des Relaisventils 28 entkoppelt ist, kann die erfindungsgemäße Feststellbremsanlage im Vergleich zum Stand der Technik zusätzlich eine Streckbremsfunktion zur Verfügung stellen.

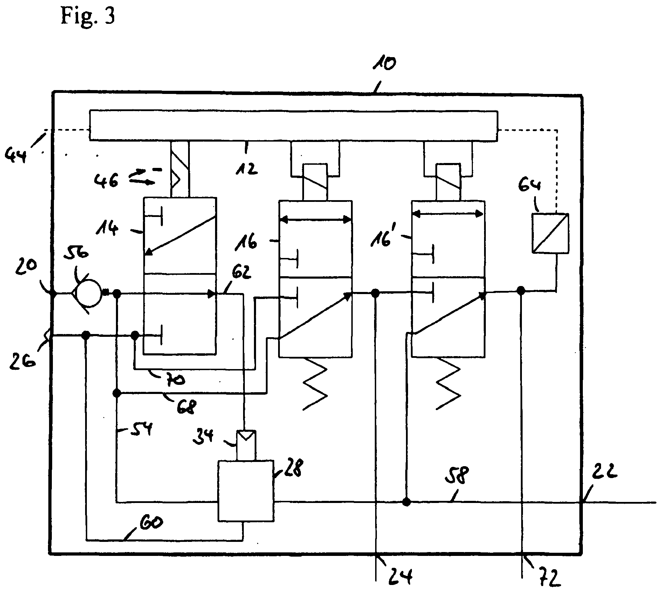

Figur 3 zeigt eine schematische Darstellung der Steuereinheit für eine weitere elektrische Feststellbremsanlage gemäß der vorliegenden Erfindung. Die hier dargstellte Steuereinheit 10 realisiert eine Kombination der Schaltung gemäß dem Stand der Technik (Figur 1) und der in Figur 2 dargestellten erfindungsgemäßen Lösung. Auf die Beschreibung von Komponenten und Schaltungseigenschaften, die denjenigen der Figur 2 entsprechen, wird verzichtet. Komponenten außerhalb der Steuereinheit sind nicht dargestellt. Zusätzlich zu dem Magnetventil 16, das den Druckluftarbeitsausgang 24 versorgt, ist ein weiteres ebenfalls als 3/2-Wege-Ventil ausgelegtes Magnetventil 16' vorgesehen, dass einen zusätzlichen Druckluftarbeitsausgang 72 versorgt. Die Magnetventile 16, 16' sind als monostabile Magnetventile dargestellt, die mit Federkraft in ihre Ruhelage überführt werden. Ebenfalls ist es möglich, diese Magnetventile 16, 16' als bistabile Magnetventile zu realisieren, also in der Weise, wie es im Zusammenhang mit Figur 2 beschrieben wurde.

Ein weiterer Unterschied zwischen Figur 3 und Figur 2 ist darin zu erkennen, dass zwischen die Ventileinrichtung 14 und dem Steuereingang 34 des Relaisventils 28 kein Druckhalteventil geschaltet ist. Die Ausführungsform gemäß Figur 3 kann jedoch ohne weiteres durch ein solches Druckhalteventil ersetzt werden, wie es im Zusammenhang mit Figur 2 (Bezugszeichen 18) beschrieben wurde.

Bei der Steuereinheit 10 gemäß Figur 3 wird wahlweise entweder der Druckluftarbeitsausgang 24 oder der Druckluftarbeitsausgang 72 verwendet. Wird der Druckluftarbeitsausgang 72 verwendet, so arbeitet die Feststellbremsanlage vergleichbar zu derjenigen gemäß Figur 1. Die Ansteuerung des hier nicht dargestellten Anhängersteuermoduls über den Druckluftarbeitsausgang 72 erfolgt im dargestellten Schaltzustand der Ventileinrichtung 16 in Abhängigkeit der Ansteuerung des Relaisventils 28 durch die Ventileinrichtung 14. Auch hier ist eine Testfunktion durch die Ventileinrichtung 16' realisierbar, da die Ventileinrichtung 16' über die Ventileinrichtung 16 in deren dargestelltem Schaltzustand direkt mit der Versorgungsleitung 54 koppelbar ist. Der dem zu den nicht dargestellten Federspeicherzylindern führenden Druckluftarbeitsausgang zugeführte Druck wird im vorliegenden Beispiel durch den Drucksensor 64 über die zweite Ventileinrichtung 16' erfasst, wobei eine andersartige Anbindung des Drucksensors 64 ebenfalls möglich ist, beispielsweise direkt an die Arbeitsleitung 58.

Wird bei der dargestellten Steuereinheit 10 der Druckluftarbeitsausgang 24 verwendet, so arbeitet diese vergleichbar zu der Steuereinheit 10 gemäß Figur 2, selbstverständlich abgesehen von der optionalen Funktionalität des Druckhalteventils und der sonstigen bereits erwähnten Unterschiede zwischen den Steuereinheiten gemäß Figur 2 und Figur 3.

Die Steuereinheit 10 gemäß Figur 3 ist somit im Hinblick auf die Kundenwünsche besonders flexibel anpassbar. Wünscht ein Fahrzeughersteller eine an die Ansteuerung des Relaisventils 28 gekoppelte Ansteuerung des Anhängersteuermoduls, so wird der Druckluftausgang 72 zur Verfügung gestellt, während der Druckluftausgang 24 verschlossen ist, entweder durch einen Verschlussstopfen oder dadurch, dass der entsprechende Luftkanal bei der Fertigung nicht in die Steuereinheit 10 eingebracht wird. Wird umgekehrt gewünscht, die Entlüftung des Anhängersteuermoduls unabhängig von der entlüftenden Stellung des Relaisventils 28 zur Verfügung zu stellen, womit insbesondere eine Streckbremsfunktion realisiert werden kann, wird der Druckluftarbeitsausgang 24 zur Verfügung gestellt, während der Druckluftarbeitsausgang 72 dann nicht benötigt wird. Insbesondere kann hierdurch auch den Kundenwünschen nach gebremsten Anhänger im Parkzustand beziehungsweise ungebremstem Anhänger im Parkzustand Rechnung getragen werden, nämlich je nachdem, welcher Druckluftarbeitsausgang 24, 72 verwendet wird.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Steuereinheit
- 12: Steuerelektronik
- 14: Ventileinrichtung
- 16: Ventileinrichtung
- 16': Ventileinrichtung
- 18: Ventileinrichtung
- 20: Drucklufteingang
- 22: Druckluftarbeitsausgang
- 24: Druckluftarbeitsausgang
- 26: Entlüftungsausgang
- 28: Relaisventil
- 30: Federspeicherzylinder
- 32: Drucksensor
- 34: Steuereingang
- 36: Anhängersteuermodul
- 38: Druckluftquelle
- 40: Vorsorgungskupplung
- 42: Steuerkupplung
- 44: elektrische Schnittstelle
- 46: Verriegelungseinrichtung
- 48: Verriegelungseinrichtung
- 50: Feder
- 52: Steuereingang
- 54: Versorgungsleitung
- 56: Rückschlagventil
- 58: Arbeitsleitung
- 60: Enlüftungsleitung
- 62: Steuerleitung
- 64: Drucksensor
- 68: Versorgungsleitung
- 70: Entlüftungsleitung
- 72: Druckluftarbeitsausgang
- 110: Steuereinheit
- 112: Steuerelektronik
- 114: Magnetventil
- 116': Magnetventil
- 118: Magnetventil
- 120: Drucklufteingang
- 122: Druckluftarbeitsausgang
- 124: Druckluftarbeitsausgang
- 126: Entlüftungsausgang
- 128: Relaisventil
- 130: Federspeicherzylinder
- 132: Drucksensor
- 134: Steuereingang
- 136: Anhängersteuermodul
- 138: Versorgungseingang
- 140: Versorgungskupplung
- 142: Steuerkupplung
- 144: elektrische Schnittstelle
- 146: Verriegelungseinrichtung
- 148: Feder
- 152: Steuereingang
- 154: Versorgungsleitung
- 156: Rückschlagventil
- 158: Arbeitsleitung
- 160: Entlüftungsleitung
- 162: Steuerleitung
- 164: Drucksensor

## Patentansprüche

1. Feststellbremsanlage für ein mit einem Anhänger pneumatisch koppelbares Nutzfahrzeug, mit einer Steuereinheit (10), die eine Steuerelektronik (12), mindestens eine erste und eine zweite von der Steuerelektronik ansteuerbare Ventileinrichtung (14, 16, 18), die jeweils mindestens zwei Schaltzustände aufweisen, einen mit einer Druckluftquelle koppelbaren Drucklufteingang (20), mindestens einen ersten und einen zweiten Druckluftarbeitsausgang (22, 24) und einen Entlüftungsausgang (26) umfasst,
- wobei ein Relaisventil (28) vorgesehen ist, das einen durch die erste Ventileinrichtung (14) der Steuereinheit zur Verfügung gestellten Steuerdruck empfängt und in Abhängigkeit des Steuerdruckes mindestens einen Federspeicherzylinder (30) be- oder entlüftet,
- wobei eine Anhängerbremsanlage in Abhängigkeit eines von der zweiten Ventileinrichtung (16) zur Verfügung gestellten und durch einen Drucksensor (32) erfassbaren Steuerdruckes be- oder entlüftbar ist und
- wobei die zweite Ventileinrichtung (16) in einem ersten ihrer mindestens zwei Schaltzustände ohne Zwischenschaltung des Relaisventils (28) mit dem Drucklufteingang (20) der Steuereinheit (10) gekoppelt ist,
**dadurch gekennzeichnet,**
**dass** die zweite Ventileinrichtung (16) in einem zweiten ihrer mindestens zwei Schaltzustände ohne Zwischenschaltung des Relaisventils (28) mit dem Entlüftungsausgang (26) der Steuereinheit gekoppelt ist, wobei die zweite Ventileinrichtung (16) über eine Versorgungsleitung (68) und ein Rückschlagventil (56) mit dem Drucklufteingang (20) der Steuereinheit (10) in Verbindung steht und mit dem Entlüftungsausgang (26) über eine Entlüftungsleitung (70) verbunden ist.

2. Feststellbremsanlage nach Anspruch 1, **dadurch gekennzeichnet, dass** die zweite Ventileinrichtung (16) ein bistabiles 3/2-Wege-Magnetventil ist, das in seinem ersten Schaltzustand den zweiten Druckluftarbeitsausgang (24) belüftet und die Anhängerbremsanlage entlüftet, während in dem zweiten Schaltzustand der zweite Druckluftarbeitsausgang (24) entlüftet und die Anhängerbremsanlage belüftet werden.

3. Feststellbremsanlage nach Anspruch 1 oder 2, **dadurch gekennzeichnet, dass** der Drucksensor (32) in einem Anhängersteuermodul (36) vorgesehen ist, das mit einer Druckluftquelle (38) und dem zweiten Druckluftarbeitsausgang (24) sowie mit einer Versorgungskupplung (40) und einer Steuerkupplung (42) zur Versorgung und Steuerung der Anhängerbremsanlage verbunden ist.

4. Feststellbremsanlage nach einem der vorhergehenden Ansprüche, **dadurch gekennzeichnet, dass** die Steuereinheit (10) in eine elektronische Druckluftversorgungseinrichtung integriert ist.

5. Verfahren zum Steuern und/oder Regeln des Betriebs einer Feststellbremsanlage für ein mit einem Anhänger pneumatisch koppelbares Nutzfahrzeug, wobei die Feststellbremsanlage eine Steuereinheit (10) aufweist, die eine Steuerelektronik (12), mindestens eine erste und eine zweite von der Steuerelektronik ansteuerbare Ventileinrichtung (14, 16, 18), die jeweils mindestens zwei Schaltzustände aufweisen, einen mit einer Druckluftquelle koppelbaren Drucklufteingang (20), mindestens einen ersten und einen zweiten Druckluftarbeitsausgang (22, 24) und einen Entlüftungsausgang (26) umfasst,
- wobei ein Relaisventil (28) vorgesehen ist, das einen durch die erste Ventileinrichtung (14) der Steuereinheit zur Verfügung gestellten Steuerdruck empfängt und in Abhängigkeit des Steuerdruckes mindestens einen Federspeicherzylinder (30) be- oder entlüftet,
- wobei eine Anhängerbremsanlage in Abhängigkeit eines von der zweiten Ventileinrichtung (16) zur Verfügung gestellten und durch einen Drucksensor (32) erfassbaren Steuerdruckes be- oder entlüftet wird und
- wobei die zweite Ventileinrichtung (16) in einem ersten ihrer mindestens zwei Schaltzustände ohne Zwischenschaltung des Relaisventils (28) mit dem Drucklufteingang der Steuereinheit (10) gekoppelt ist,
**dadurch gekennzeichnet,**
**dass** die zweite Ventileinrichtung (16) in einem zweiten ihrer mindestens zwei Schaltzustände ohne Zwischenschaltung des Relaisventils (28) mit dem Entlüftungsausgang (26) der Steuereinheit gekoppelt ist, wobei die zweite Ventileinrichtung (16) über eine Versorgungsleitung (68) und ein Rückschlagventil (56) mit dem Drucklufteingang (20) der Steuereinheit (10) in Verbindung steht und mit dem Entlüftungsausgang (26) über eine Entlüftungsleitung (70) verbunden ist.

6. Verfahren nach Anspruch 5, **dadurch gekennzeichnet, dass** die zweite Ventileinrichtung (16) ein bistabiles 3/2-Wege-Magnetventil ist, das in seinem ersten Schaltzustand den zweiten Druckluftarbeitsausgang (24) belüftet und die Anhängerbremsanlage entlüftet, während in dem zweiten Schaltzustand der zweite Druckluftarbeitsausgang (24) entlüftet und die Anhängerbremsanlage belüftet werden.

7. Verfahren nach Anspruch 5 oder 6, **dadurch gekennzeichnet, dass** der erste Schaltzustand der zweiten Ventileinrichtung (16) während der Fahrt des Nutzfahrzeugs und zur Realisierung einer Testfunktion eingestellt wird.

8. Verfahren nach einem der Ansprüche 5 bis 7, **dadurch gekennzeichnet, dass** der zweite Schaltzustand der zweiten Ventileinrichtung (16) zum Parken des Nutzfahrzeugs und während der Fahrt des Nutzfahrzeugs zur Realisierung einer Streckbremsfunktion eingestellt wird.

## Claims

1. Parking brake system for a commercial vehicle which can be pneumatically coupled to a trailer, comprising a controller (10) which includes an electronic control unit (12), at least one first and one second valve device (14, 16, 18) which are selectable by the electronic control unit and have at least two switching states each, a compressed air inlet (20) which can be coupled to a compressed air source, at least one first and one second compressed air operating outlet (22, 24) and a venting outlet (26),
- wherein a relay valve (28) is provided which receives a control pressure made available by the first valve device (14) of the controller and ventilates or vents at least one spring brake cylinder (30) as a function of the control pressure,
- wherein a trailer brake system can be ventilated or vented as a function of a control pressure made available by the second valve device (16) and detectable by a pressure sensor (32), and
- wherein the second valve device (16) is, in a first of its at least two switching states, coupled to the compressed air inlet (20) of the controller (10) without the interposition of the relay valve (28),
**characterised in that**
the second valve device (16) is, in a second of its at least two switching states, coupled to the venting outlet (26) of the controller without the interposition of the relay valve (28), wherein the second valve device (16) communicates via a supply line (68) and a non-return valve (56) with the compressed air inlet (20) of the controller (10) and is connected to the venting outlet (26) via a venting line (70).

2. Parking brake system according to claim 1, **characterised in that** the second valve device (16) is a bistable 3/2-way solenoid valve which, in its first switching state, ventilates the second compressed air operating outlet (24) and vents the trailer brake system, while, in the second switching state, the second compressed air operating outlet (24) is vented and the trailer brake system is ventilated.

3. Parking brake system according to claim 1 or 2, **characterised in that** the pressure sensor (32) is provided in a trailer control module (36) which is connected to a compressed air source (38) and the second compressed air operating outlet (24) as well as to a supply coupling (40) and a control coupling (42) for the supply and control of the trailer brake system.

4. Parking brake system according to any of the preceding claims, **characterised in that** the controller (10) is integrated into an electronic compressed air supply device.

5. Method for the open-loop and/or closed-loop control of the operation of a parking brake system for a commercial vehicle which can be pneumatically coupled to a trailer, wherein the parking brake system has a controller (10) which includes an electronic control unit (12), at least one first and one second valve device (14, 16, 18) which are selectable by the electronic control unit and have at least two switching states each, a compressed air inlet (20) which can be coupled to a compressed air source, at least one first and one second compressed air operating outlet (22, 24) and a venting outlet (26),
- wherein a relay valve (28) is provided which receives a control pressure made available by the first valve device (14) of the controller and ventilates or vents at least one spring brake cylinder (30) as a function of the control pressure,
- wherein a trailer brake system is ventilated or vented as a function of a control pressure made available by the second valve device (16) and detectable by a pressure sensor (32), and
- wherein the second valve device (16) is, in a first of its at least two switching states, coupled to the compressed air inlet of the controller (10) without the interposition of the relay valve (28),
**characterised in that**
the second valve device (16) is, in a second of its at least two switching states, coupled to the venting outlet (26) of the controller without the interposition of the relay valve (28), wherein the second valve device (16) communicates via a supply line (68) and a non-return valve (56) with the compressed air inlet (20) of the controller (10) and is connected to the venting outlet (26) via a venting line (70).

6. Method according to claim 5, **characterised in that** the second valve device (16) is a bistable 3/2-way solenoid valve which, in its first switching state, ventilates the second compressed air operating outlet (24) and vents the trailer brake system, while, in the second switching state, the second compressed air operating outlet (24) is vented and the trailer brake system is ventilated.

7. Method according to claim 5 or 6, **characterised in that** the first switching state of the second valve device (16) is set while the commercial vehicle is travelling and in order to implement a test function.

8. Method according to any of claims 5 to 7, **characterised in that** the second switching state of the second valve device (16) is set for parking the commercial vehicle and, while the commercial vehicle is travelling, in order to implement a stretch braking function.

## Revendications

1. Système de frein de stationnement pour un véhicule utilitaire pouvant être attelé pneumatiquement à une remorque, ayant une unité (10) de commande, qui comprend une électronique (12) de commande, au moins un premier et un deuxième dispositifs (14, 16, 18) de vanne pouvant être commandés par l'électronique de commande et ayant respectivement deux états de commutation, une entrée (20) d'air comprimé pouvant communiquer avec une source d'air comprimé, au moins une première et une deuxième sorties (22, 24) de travail d'air comprimé et une sortie (26) de mise à l'atmosphère,
- dans lequel il est prévu une vanne (28) relais, qui reçoit une pression de commande mise à disposition par le premier dispositif (14) de vanne de l'unité de commande et qui alimente en air ou met à l'atmosphère au moins un cylindre (30) à ressort accumulateur en fonction de la pression de commande,
- dans lequel un système de frein de remorque peut être alimenté en air ou être mis à l'atmosphère en fonction d'une pression de commande mise à disposition par le deuxième dispositif (16) de vanne et pouvant être détectée par un capteur (32) de pression et
- dans lequel le deuxième dispositif (16) de vanne communique avec l'entrée (20) d'air comprimé de l'unité (10) de commande, sans interposition de la vanne (28) relais dans un premier de ces au moins deux états de commutation,
**caractérisé en ce que** le deuxième dispositif (16) de vanne communique avec la sortie (26) de mise à l'atmosphère de l'unité de commande, sans interposition de la vanne (28) relais dans un deuxième de ces au moins deux états de commutation. Le deuxième dispositif (16) de vanne communiquant, par un conduit (68) d'alimentation et un clapet (56) antiretour, avec l'entrée (20) d'air comprimé et communiquant, par un conduit (70) de mise à l'atmosphère, avec la sortie (26) de mise à l'atmosphère.

2. Système de frein de stationnement suivant la revendication 1, **caractérisé en ce que** le deuxième dispositif (16) de vanne est une électrovanne bistable à 3/2 voies, qui, dans son premier état de commutation, alimente en air la deuxième sortie (24) de travail d'air comprimé et met le système de frein de remorque à l'atmosphère, tandis que, dans le deuxième état de commutation, il met la deuxième sortie (24) de travail d'air comprimé à l'atmosphère et alimente en air le système de frein de remorque.

3. Système de frein de stationnement suivant la revendication 1 ou 2, **caractérisé en ce que** le capteur (32) de pression est prévu dans un module (36) de commande de remorque, qui communique avec une source (38) d'air comprimé et avec la deuxième sortie (24) de travail d'air comprimé, ainsi qu'avec un couplage (40) d'alimentation et un couplage (42) de commande pour l'alimentation et la commande du système de frein de remorque.

4. Système de frein de stationnement suivant l'une des revendications précédentes, **caractérisé en ce que** l'unité (10) de commande est intégrée dans un dispositif électronique d'alimentation en air comprimé.

5. Procédé de commande et/ou de régulation du fonctionnement d'un système de frein de stationnement pour un véhicule utilitaire pouvant être attelé pneumatiquement à une remorque, dans lequel le système de frein de stationnement a une unité (10) de commande, qui comprend une électronique (12) de commande, au moins un premier et un deuxième dispositifs (14, 16, 18) de vanne pouvant être commandés par l'électronique de commande et ayant respectivement deux états de commutation, une entrée (20) d'air comprimé pouvant communiquer avec une source d'air comprimé, au moins une première et une deuxième sorties (22, 24) de travail d'air comprimé et une sortie (26) de mise à l'atmosphère,
- dans lequel il est prévu une vanne (28) relais, qui reçoit une pression de commande mise à disposition par le premier dispositif (14) de vanne de l'unité de commande et qui alimente en air ou met à l'atmosphère au moins un cylindre (30) à ressort accumulateur en fonction de la pression de commande,
- dans lequel un système de frein de remorque est alimenté en air ou est mis à l'atmosphère en fonction d'une pression de commande mise à disposition par le deuxième dispositif (16) de vanne et pouvant être détectée par un capteur (32) de pression et
- dans lequel le deuxième dispositif (16) de vanne communique avec l'entrée (20) d'air comprimé de l'unité (10) de commande sans interposition de la vanne (28) relais dans un premier de ces au moins deux états de commutation,
**caractérisé en ce que** le deuxième dispositif (16) de vanne communique avec la sortie (26) de mise à l'atmosphère de l'unité de commande, sans interposition de la vanne (28) relais dans un deuxième de ces au moins deux états de commutation. Le deuxième dispositif (16) de vanne communiquant, par un conduit (68) d'alimentation et un clapet (56) antiretour, avec l'entrée (20) d'air comprimé et communiquant, par un conduit (70) de mise à l'atmosphère, avec la sortie (26) de mise à l'atmosphère.

6. Procédé suivant la revendication 5, **caractérisé en ce que** le deuxième dispositif (16) de vanne est une électrovanne bistable à 3/2 voies, qui, dans son premier état de commutation, alimente en air la deuxième sortie (24) de travail d'air comprimé et met le système de frein de remorque à l'atmosphère, tandis que, dans le deuxième état de commutation, il met la deuxième sortie (24) de travail d'air comprimé à l'atmosphère et alimente en air le système de frein de remorque.

7. Procédé suivant la revendication 5 ou 6, **caractérisé en ce que** le premier état de commutation du deuxième dispositif (16) de vanne est réglé pour la réalisation d'une fonction de test pendant la marche du véhicule utilitaire.

8. Procédé suivant l'une des revendications 5 à 7, **caractérisé en ce que** le deuxième état de commutation du deuxième dispositif (16) de vanne est réglé pour le stationnement du véhicule utilitaire et pour la réalisation d'une fonction de frein de maintien en ligne pendant la marche du véhicule utilitaire.
